# EUROPEAN PATENT SPECIFICATION

(11) **EP 2 546 515 B1**
(45) Date of publication and mention of the grant of the patent: **18.09.2013**
(21) Application number: 11173997.5
(22) Date of filing: 14.07.2011
(51) Int. Cl.: F03D 11/00

(54) **Wind turbine cooling arrangement**
Windturbinen-Kühlanordnung
Agencement de refroidissement d'une éolienne

(43) Date of publication of application: 16.01.2013
(73) Proprietor: Siemens Aktiengesellschaft, 80333 München (DE)
(72) Inventor: Wang, Alex Yundong, 7400 Herning (DK)

(56) References cited:
- EP-A2- 1 586 769
- WO-A2-2009/033925
- WO-A2-2010/085960
- WO-A2-2010/085963

## Description

The invention describes a wind turbine cooling arrangement and a wind turbine comprising such a cooling arrangement.

During operation of a wind turbine, heat is generated in various components, for example in the field of an electrical machine, in a converter, etc. This heat must somehow be dissipated in order to prevent overheating and heat-damage of the wind turbine components. Therefore, a wind turbine generally also comprises a cooling circuit. Such a cooling circuit can, for example, comprise heat-exchanging modules located close to the source(s) of heat, and these in turn are connected to an arrangement of pipes or tubes in which a coolant or heat transfer fluid circulates. In this way, heat can effectively be transferred from the hot components to the coolant in the cooling circuit. The warmed heat transfer fluid must then also be cooled in order for the cooling circuit to function effectively. Therefore, some way of dissipating the heat from the cooling circuit to the ambient surroundings is also usually necessary, particularly for large generators in which high temperatures can be reached during normal operation. For example, cool air can be directed to pass over conduits or heat exchangers of the cooling circuit, and the warmed air can be extracted or pumped out, as disclosed in EP 1 586 769 A2. However, since heat is essentially always generated by components of a wind turbine, even if the rotor blades are not turning, so that energy is essentially always required to power active cooling components such as pumps, compressors, ventilators etc. Furthermore, such active cooling is associated with costly machinery such as pumps and compressors that also require maintenance on a regular basis, since an efficient cooling is of paramount importance in a wind turbine.

A solution is known in which a cooling circuit in the interior of the nacelle or canopy is fed into a passive heat exchanger panel located on the exterior of the canopy, for example as disclosed in the related documents WO 2010/085960 A2 and WO 2010/085963 A2. The panel is exposed to air and wind, which has the effect of cooling the cooling fluid, which can circulate in conduits or pipes arranged in the panel. Such a panel generally comprises a plurality of fins arranged with gaps in between to allow air to effectively pass through the panel, covering a relatively large surface area given by the fins. Evidently, the cooling capacity of such a panel is directly related to its size. A large wind turbine, for example a turbine with a capacity in the region of 5 MW, would require a correspondingly large panel. However, optimal cooling can be achieved only if the panel extends above the canopy, since the cooling effect of the wind is greatest there. Any part of the panel extending below the canopy or horizontally outward from the canopy would not be sufficiently exposed to air or wind, since those region are effectively screened from the wind, by the canopy itself or by the tower supporting the canopy. WO 2009/033925 A2 describes a cooling arrangement in which an annular heat emission unit is arranged as a ring about the body of the canopy, and is connected by conduits to a heat absorption unit inside the canopy. To make up for the less than optimal placement of the heat emission unit, additional air channels are required on the outside of the canopy to direct an airflow from the sides of the canopy to the heat emission unit. However, such external air channels might be subject to weather damage over time. Therefore, the only really effective location for the panel is above the canopy.

Another reason for having the panel on the outside of the canopy is for ease of maintenance. However, wind turbines in wind parks, particularly in offshore locations, are serviced by maintenance workers transported to the canopy by helicopter. Therefore, a platform is mounted on the top of the canopy so that the workers can safely by lowered or lifted. Safety regulations of the aviation authorities place limits on the height of any object with a certain range of the platform. For example, European aviation authorities specify a maximum height of 1.5 m for objects near the platform. Therefore, the panel of a passive heat exchanger cannot exceed 1.5 m when arranged close to such a platform. However, this height directly limits the cooling capacity, since the passive heat exchanger cannot, for practical reasons, be extended sideways beyond to the sides of the canopy or downwards below the canopy.

It is therefore an object of the invention to provide an improved cooling arrangement.

The object of the invention is achieved by the wind turbine cooling arrangement according to claim 1, and by the wind turbine of claim 12.

According to the invention, the wind turbine cooling arrangement comprises a passive heat exchanger arranged to absorb heat from a cooling circuit of a wind turbine, which passive heat exchanger is arranged on the exterior of the canopy to extend above the canopy; and a ventilation arrangement, which ventilation arrangement comprises at least one air channel, arranged in the interior of the canopy, for channelling air onto a surface of the passive heat exchanger, wherein the air channel comprises an outlet for expelling the channelled air, which outlet is arranged in a posterior surface of the canopy to open onto the passive heat exchanger. The air channel can be arranged in the interior of the canopy in the manner of a 'tunnel'.

An advantage of the cooling arrangement according to the invention is that the cooling capacity of the passive heat exchanger can easily be increased without having to increase its dimensions. An additional active cooling of the heat transfer fluid in the cooling circuit is not required in the interior of the canopy, so that expense can be spared. Instead, by directing more air at the surface of the passive heat exchanger, the cooling capacity of the cooling arrangement can be boosted or increased to a satisfactory level. Therefore, the cooling arrangement according to the invention provides a solution that can provide sufficient cooling capacity by augmenting passive cooling with channelled air, while also allowing height regulations to be complied with, since the height of the passive heat exchanger need not be increased. Furthermore, the solution according to the invention is particularly economical and cost-effective to carry out, since the ventilation arrangement can be realised in a straightforward manner.

According to the invention, a wind turbine comprises such a wind turbine cooling arrangement.

Particularly advantageous embodiments and features of the invention are given by the dependent claims, as revealed in the following description. Features described in the context of one claim category can apply equally to another claim category. Features of the different claim categories may be combined as appropriate to arrive at further embodiments.

As mentioned above, the air channel is arranged in the interior of the canopy, in the manner of a 'tunnel', and, in a particularly preferred embodiment of the invention, the air channel comprises an inlet arranged on a surface of the canopy for drawing in air.

The inlet is preferably arranged on a longitudinal surface of the canopy.

Of course, the ventilation system can also comprise an additional external air channel mounted onto the exterior of the canopy. Such an air channel could be, for example, a flexible pipe or tube open at both ends and arranged such that air flows into the tube and exits onto the passive heat exchanger. An external channel can also comprise a number of openings in a surface, for example the openings in a mesh- or grid-like panel arranged on the canopy. In this way, the cooling capacity of an existing passive cooling arrangement could be increased in a simple manner. However, such an external air channel might be subject to weather damage over time.

In a particularly preferred embodiment of the invention, the inlet of an air channel is arranged at a region of high pressure at the surface of the canopy, and an outlet of that air channel is arranged at a region of low pressure at the surface of the canopy. The outlet of an air channel is preferably wider than the main part of the channel and also wider than the inlet, so that the outlet end of a channel has a funnel shape. Furthermore, the outlets two or more air channels can be combined to obtain a larger outlet area. A flow of air through the channel can therefore be established in a purely passive manner, since air will be drawn or will move of its own accord through the open air channel from the region of relatively higher pressure at the inlet to the region of under-pressure or lower pressure at the outlet. The aerodynamic properties of the canopy are such that the air pressure behind the relatively blunt end of the canopy is considerably lower than the air pressure at the top or at the sides of the canopy. Therefore, with only minor additional design effort, a satisfactory airflow can be achieved through the air channel.

The outlet is arranged in a posterior surface of the canopy. To allow the air to freely exit the air channel and to pass directly through the passive heat exchanger, the canopy is designed so that the air channel outlet is close to the passive heat exchanger. In a preferred embodiment of the invention, one or more outlets of the air channel(s) are arranged to open essentially directly onto the passive heat exchanger. To this end, any gap between the rear end of the canopy and the passive heat exchanger is preferably kept as small as possible, so that air exiting the air channel does not 'escape' through gaps between the sides of the canopy and the passive heat exchanger, and passes instead through the passive heat exchanger. The passive heat exchanger can be firmly secured to the canopy by struts or other connectors at appropriate points.

The air outlets of the channels can be arranged to open onto any appropriate portion of the passive heat exchanger. However, in a particularly preferred embodiment of the invention, the outlet(s) are arranged to direct a cooling airflow at a thermal transfer region of the passive heat exchanger, wherein a "thermal transfer region" is to be understood as a region in the vicinity of the entry point(s) of the hot transfer fluid into the heat exchanger, since such a region of the heat exchanger is warmest. In this way, by arranging the outlet of the air channel to open onto the hottest part or region of the passive heat exchanger, the cooling contribution of the ventilation system can be optimised, and the heat transfer fluid can be subject to a very effective cooling. The cooling effect of the airflow over the panel can then be sufficient to satisfactorily cool the heat transfer fluid.

Typically, the heat generated by the components in the wind turbine - generally referred to as 'heat loss' - increases proportionally to the wind speed up to a certain threshold wind speed, beyond which the heat loss remains essentially constant. For instance, at low wind speed, the heat-generating components only generate relatively little heat. At speeds above the threshold wind speed, the cooling effect of the wind striking the panel and passing over it may be sufficient to cope with the maximum heat loss of the components. However, the cooling capacity of the passive heat exchanger described herein follows an essentially parabolic curve, as will be explained with the aid of the diagrams. Therefore, if a cooling arrangement according to the invention (with a passive heat exchanger and one or more air channels) is to cover the cooling requirements of the wind turbine, there may be situations - for example at wind speeds below the threshold wind speed, and wind speeds above the threshold wind speed - in which the cooling capacity of the cooling arrangement is greater than actually required. On the other hand, if the excess cooling capacity is to be minimised, for example by using a smaller panel, the cooling capacity may not be sufficient to cope with the heat loss at wind speeds in the region of the threshold wind speed.

Therefore, in a particularly preferred embodiment of the invention, the ventilation arrangement comprises a ventilator or fan arranged in an air channel so that the airflow through that air channel can be favourably augmented or increased. By increasing the velocity of the air that exits the outlet of the air channel and passes over the panel, the cooling effect of the airflow is increased.

At low wind speeds, or at wind speeds above the threshold wind speed, the cooling effect of the panel and the unassisted airflow through the air channels may be sufficient to provide enough cooling. Therefore, in a further preferred embodiment of the invention, the ventilator is activated according to an operational parameter, for example wind speed, rotor speed of the wind turbine, so that the cooling effect of the fan can be activated as required. Generally, a wind turbine is equipped with a wind speed sensor and/or a rotor speed sensor. The output value of such a sensor could be used to control the fan. For example, a fan could be turned on at a wind speed greater than a predefined minimum wind speed, and turned off again for wind speeds exceeding a predefined maximum wind speed. Alternatively, the ventilator could be controlled dynamically, for example by gradually increasing the speed of rotation of the fan as the wind speed increases towards the threshold wind speed, and by gradually decreasing the speed of rotation of the fan as the wind speed increases beyond the threshold wind speed. Such a fan or ventilator could be realised as a frequency controlled ventilator. Of course, the same control approach applies for decreasing wind speeds, in which case the ventilator is activated or dynamically controlled to cope with the increased cooling requirements as the wind speed drops.

To provide an even and thorough cooling of the panel, the ventilation arrangement in the cooling arrangement according to the invention preferably comprises at least two channels. In a preferred arrangement, the cooling arrangement comprises two air channels realised as interior 'tunnels' in the canopy and with inlets arranged one on each side of the canopy, for example one on each side of a heli-hoist platform. A ventilator or fan can be arranged in one or both air channels.

To obtain an optimum cooling, the passive heat exchanger and the ventilation arrangement are dimensioned such that a cooling capacity of the passive heat exchanger is less than a maximum heat loss of the wind turbine, and the ventilation arrangement is dimensioned such that a cooling capacity of the cooling arrangement matches or exceeds a maximum heat loss of the wind turbine. For example, the dimensions of the panel can be kept favourably compact, so that the cooling effect of the wind is sufficient to provide the required cooling at relatively low and relatively high wind speeds. For intermediate wind speeds and higher heat loss, the air channels can be dimensioned to provide an effective airflow, and the outlets can be arranged to direct the air at the critical or warmest parts of the panel. Outlets of two or more air channels can be combined to obtain a larger outlet area. Furthermore, any ventilators or fans can be chosen to efficiently draw air into the channels and to expel the channelled air onto the panel.

Preferably, the cooling circuit is arranged to absorb heat generated by components in the interior of the wind turbine, and heat transfer fluid is transported in conduits or pipes in the interior of the passive heat exchanger. In a preferred embodiment of the invention, the passive heat exchanger or panel comprises a housing, which housing supports a heat dissipating structure arranged to absorb heat from the cooling circuit of a wind turbine. For example, the heat dissipating structure can comprise an arrangement of vertical fins separated by gaps through which air can pass. Conduits entering the panel can be arranged to pass close by the base of the fins, so that the heat transfer fluid, moving through the conduits, can effectively transfer heat to the fins. In a further embodiment, pipes or conduits transporting heat transfer fluid could be arranged to travel through the fins, so that an additional cooling effect could be achieved.

Preferably, the material of the passive heat exchanger is light and robust, and acts as a good conductor of heat. For example, a favourable choice of material might be aluminium.

To allow the cooling arrangement according to the invention to be incorporated in a wind turbine that is to be serviced by workers transported by helicopter to the wind turbine, the passive heat exchanger preferably extends above the canopy of the wind turbine to a height that satisfies a maximum regulation height defined by a relevant aviation authority. In order to incorporate the cooling arrangement according to the invention in a wind turbine in a European region, the passive heat exchanger preferably extends above the canopy of the wind turbine to a height of at most 1.5 m.

A wind turbine according to the invention preferably comprises a platform or heli-hoist platform arranged on an upper side of the canopy, and the platform is dimensioned to take into account the geometry of the passive heat exchanger. For example, the platform may be dimensioned to be at most as wide as the passive heat exchanger, and to deflect little or no air away from the panel, so that the cooling capacity of the panel is not reduced, or is not significantly reduced, by the presence of the platform.

Preferably, a wind turbine according to the invention comprises a cooling arrangement with two air channels arranged in the interior of the canopy such that the inlets of the channels are arranged one on either side of a platform such that the air intake of the channels is not obstructed.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a schematic representation of a wind turbine with a first type of prior art cooling arrangement;
Fig. 2 shows a schematic representation of a wind turbine with a second type of prior art cooling arrangement;
Fig. 3 shows a schematic representation of a wind turbine with a cooling arrangement according to a first embodiment of the invention;
Fig. 4 shows a schematic representation of a wind turbine with a cooling arrangement according to a second embodiment of the invention;
Fig. 5 shows a schematic representation of a wind turbine with a cooling arrangement according to a third embodiment of the invention;
Fig. 6 shows a schematic representation of a wind turbine with a cooling arrangement according to a fourth embodiment of the invention;
Fig. 7 shows a graph of cooling capacity and heat loss;
Fig. 8 shows a graph of heat loss and cooling capacity of the hybrid cooling arrangement of Fig. 5.

In the drawings, like reference numbers refer to like objects throughout. Objects in the diagrams are not necessarily drawn to scale.

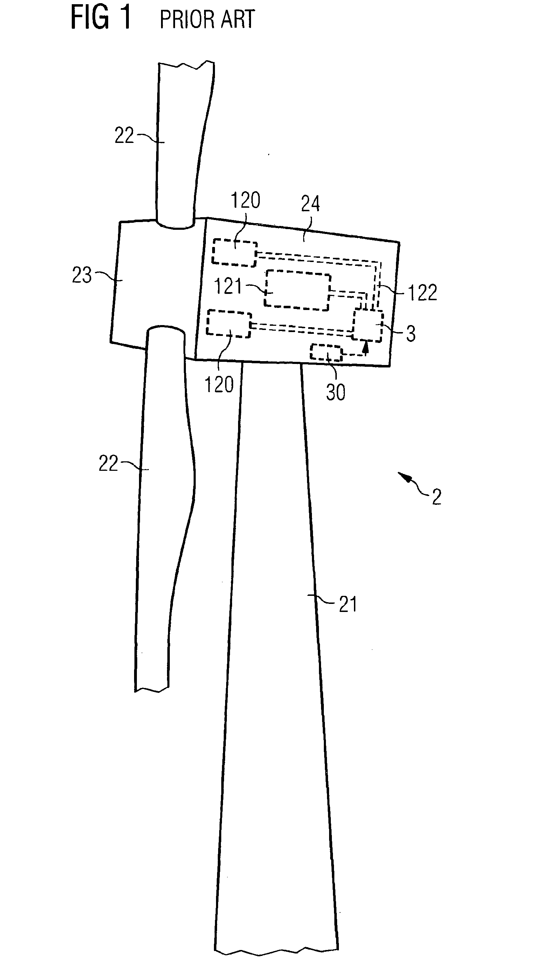

Fig. 1 shows a schematic representation of a wind turbine 2 with a first type of prior art cooling arrangement 122, 3 in the interior of a canopy 24 mounted on a tower 21. During operation of the wind turbine 2, rotor blades 22 cause the hub 23 to rotate, so that an electrical machine in the interior of the canopy is caused to generate electricity. Heat is generated during operation of the wind turbine 2, for example in components 120 or modules 120 of the electrical machine, in a power converter 121, etc. Here, only a few such heat sources 120, 121 are indicated, but it will be clear to the skilled person that heat may be generated by other components also. To cool these components 120, 121, a heat transfer fluid may be pumped through suitably placed conduits 122 or pipes 122, and the heat transfer fluid can be cooled in an active heat exchanger unit 3 using techniques known in the field of refrigeration. The active heat exchanger unit 3 requires an appropriate power supply 30. Evidently, such a power supply 30 is associated with certain running costs. Furthermore, as mentioned in the introduction, such an active heat exchanger unit 3 can be costly to manufacture and maintain.

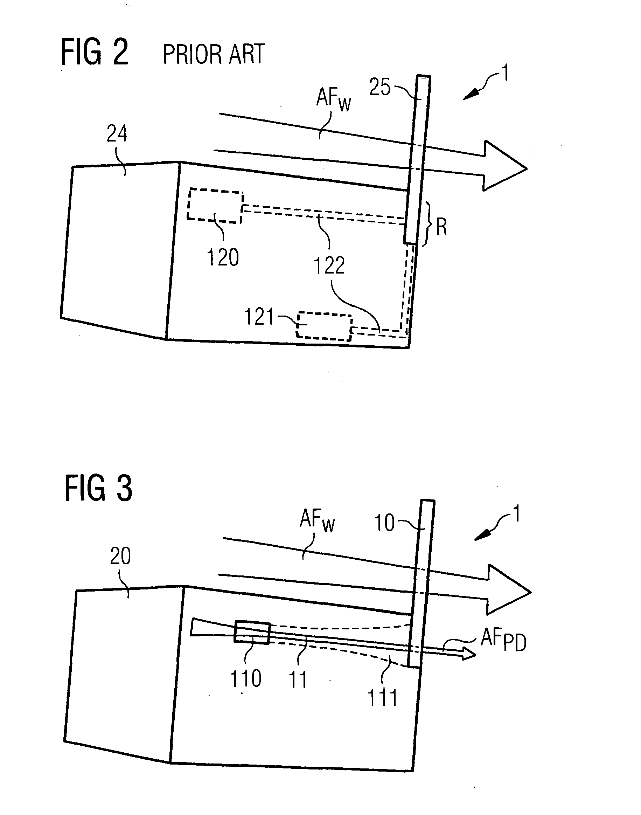

Fig. 2 shows a schematic representation of the canopy 24 of a wind turbine 2 with a second type of prior art cooling arrangement 122, 25. Here, heat generated by the heat-generating components 120, 121 of the wind turbine 2 is transferred to a heat transfer fluid in conduits 122 or pipes 122, and directed to a passive heat exchanger 25 mounted on the exterior of the canopy 24. A heat dissipating structure of the heat exchanger, for example an arrangement of vertical fins with intervening spaces or gaps, is heated at the hottest region R in which the conduits 122 enter the heat exchanger. Such a passive heat exchanger 25 generally comprises a housing supporting a plurality of heat-dissipating fins, and the conduits 122 can extend into the heat exchanger 25 and can be arranged to effectively transfer heat to the base of the fins, as will be clear to the skilled person. The passive heat exchanger 25 presents a relatively large surface area to the wind AF_{w} or airflow AF_{w} passing over the canopy 24 and through the heat exchanger 25. However, the cooling capacity of the passive heat exchanger 25 is limited by its size. Therefore, to cool a large wind turbine at all wind speeds, even around the critical threshold wind speed, the passive heat exchanger 25 would have to be correspondingly large. However, for the reasons given above, a too large passive heat exchanger 25 is impracticable, and very strong winds might even damage it. Therefore, depending on the wind turbine construction, this type of passive heat exchanger 25 with its limited surface area might not be able to provide the necessary cooling during wind speeds around the threshold wind speed.

Fig. 3 shows a schematic representation of the canopy 20 of a wind turbine 2 with a cooling arrangement 1 according to a first embodiment of the invention. For simplicity, the heat-generating components and the conduits for a heat transfer fluid are not shown, but may be assumed to be as shown in Fig. 2 above. Here, the cooling capacity of a passive heat exchanger 10 is augmented by an additional cooling means or ventilation means, in this case, an air channel 11 arranged in the interior of the canopy 20, with an air inlet 110 on the side of the canopy 20, and an air outlet 111 arranged to open onto the passive heat exchanger 10. The air channel 11 with its air inlet 110 and air outlet 111 is arranged to make use of the pressure difference in air pressure at different regions about the canopy, so that the air pressure at the air outlet 111 is lower than at the air inlet 110. The air outlet 111 is arranged to open directly onto the heat exchanger 10. In this way, airflow AF_{PD} is effectively drawn of its own accord, owing to the under-pressure at the channel outlets 111, through the air channel 11 and onwards through openings between fins of the heat exchanger 10. At wind speeds about the critical threshold wind speed, i.e. at times when the cooling requirements are greatest, the contribution of the additional air cooling provided by the airflow AF_{PD} through the air channel 11 and onto the panel 10 can be enough to ensure that the total cooling capacity of the cooling arrangement 1 is sufficient to cope with the maximum heat generated by the wind turbine components.

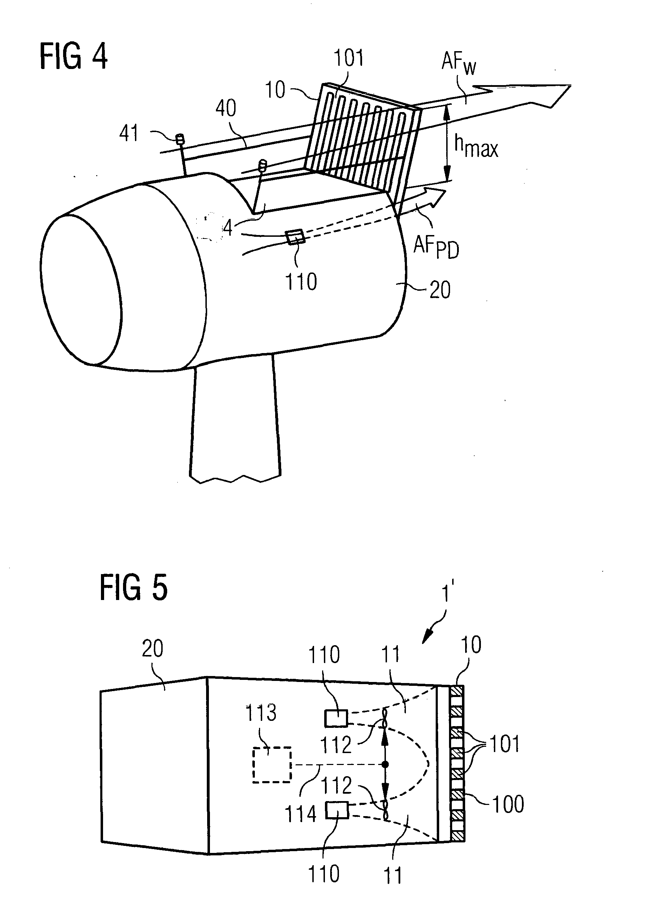

Fig. 4 shows a schematic representation of the canopy 20 of a wind turbine 2 with a cooling arrangement according to a second embodiment of the invention. This diagram also shows the fins 101 of the heat exchanger 10. Here, the passive heat exchanger 10 or panel 10 is mounted on the canopy 20 in such a way that it forms part of a heli-hoist platform 4 on top of the canopy 20. The height of the panel 10 in this embodiment does not exceed 1.5 m above the height of the platform floor, since 1.5 m is the maximum allowable height according to the European aviation authorities. A helicopter can therefore safely hover above the platform while maintenance workers are lowered to or lifted from the platform 4, for example by means of a motorised winch in the helicopter. Any railings 40 or safety features such as warning lights 41 can be arranged to avoid any obstruction of an airflow AF_{w} over the panel 10.

Fig. 5 shows a schematic representation of a wind turbine 2 with a cooling arrangement 1 according to a third embodiment of the invention. Here, the canopy 20, passive heat exchanger 10 and inlets 110 are shown from above. The cross-sectional view of the passive heat exchanger 10 schematically indicates a heat dissipating structure 101 arranged within a housing 100, for example an aluminium housing 100, with a plurality of vertical fins 101 separated by intervening spaces to maximise the area of the heat-dissipating structure 101. In this embodiment, two air channels 11 are arranged within the canopy 20. The diagram also shows a possible shape for the air channels 11, in this case, the air inlets 110 are positioned to either side of a highest part of the canopy 20, and the air outlets 111 are relatively wide, flaring towards the ends of the channels 11 to give a combined opening onto the base of the passive heat exchanger 10. Again, the air outlets 111 are arranged to open directly onto the hottest part of the heat exchanger 10. Preferably, the air channels 11 open onto a part of the panel in which the conduits, transporting warm heat transfer fluid, enter the panel, for example at a lower region of the passive heat exchanger 10. In the case where the cooling capacity of the passive heat exchanger 10 augmented by an airflow AF_{PD} (arising on account of a pressure difference between the inlets 110 and the outlets 111 or an under-pressure at the outlets 111) is insufficient to cope with the heat given off by the wind turbine components, the cooling capacity of the cooling arrangement 1 can be augmented further by activating ventilators 112 arranged in the air channels 11 to generate an increased airflow AF_{FAN} can be generated. The ventilators 112 can be activated by a signal 114 provided from a sensor 113, for example a wind speed sensor 113. At peak times, therefore, the cooling capacity of this hybrid cooling arrangement 1, using wind airflow AF_{w} and augmented channel airflow AF_{FAN} can reliably cool the heat transfer fluid of the cooling circuit to ensure optimal and sufficient cooling for the heat-generating components of the wind turbine.

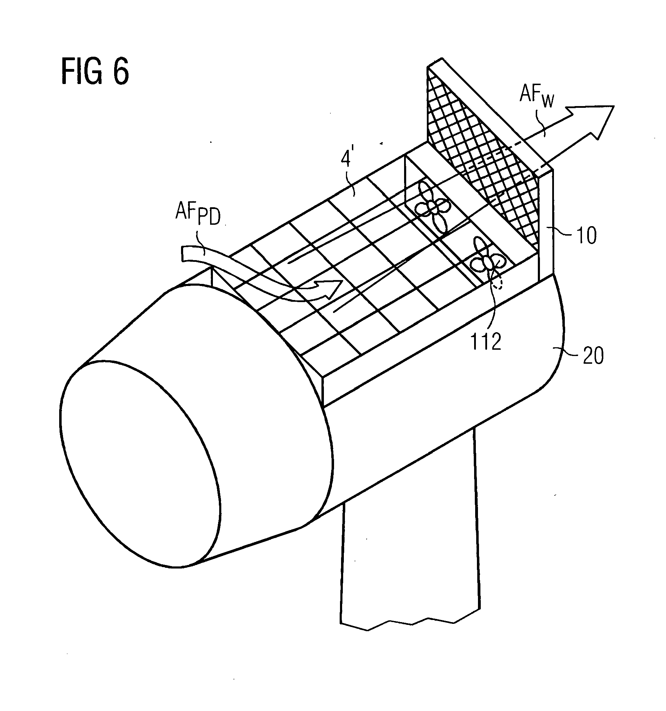

Fig. 6 shows a schematic representation of the canopy 20 of a wind turbine 2 with a cooling arrangement 1 according to a fourth embodiment of the invention. Again, the passive heat exchanger 10 or panel 10 is mounted on the canopy 20 in such a way that it forms part of a heli-hoist platform 4' on top of the canopy 20. However, in this realisation, the heli-hoist platform 4' comprises a robust mesh 4' or grid 4' with many openings or holes to allow air to pass from above the canopy to a space underneath the platform 4', providing an additional cooling airflow AF_{PD}. In this embodiment, ventilators 112 are also positioned in the space beneath the platform 4', and can be used to generate an increased airflow as required.

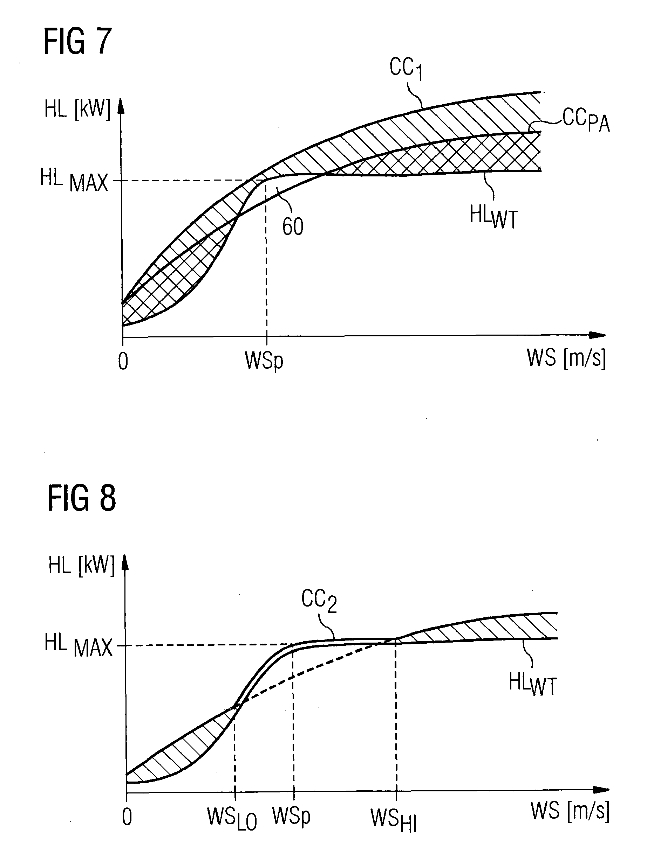

Fig. 7 shows graphs of the cooling capacity CC_{PA} of a prior art passive heat exchanger shown in Fig, 2, the cooling capacity CC₁ of a cooling arrangement according to the embodiment described in Fig. 3, and the heat loss HL (in kW) of the components of the wind turbine as a function of wind speed WS (in m/s). The maximum heat loss HL_{MAX} depends of a wind turbine depends on various factors, for example the wind turbine dimensions, the efficiency of the electric machine, reactive power mode of the converter, etc. The graph shows a wind turbine heat loss curve HL_{WT}. As the wind speed increases from 0 m/s, the heat loss of the wind turbine increases steadily, up to a certain maximum value HL_{MAX}. Beyond a certain wind speed WS_{TH}, the heat loss remains more or less at this maximum HL_{MAX}. The cooling capacity of a cooling arrangement using a passive heat exchanger, as described in Figs. 2 and 3 above, follows an essentially parabolic curve CC_{PA}, CC₁. The steepness of this curve will depend on the area of the passive heat exchanger. As indicated by the curve CC_{PA}, the cooling capacity of a prior art passive heat exchanger that is not large enough is insufficient to cope with the peak cooling requirements. This 'insufficiency' is indicated by the intersection 60 of the first curve CC_{PA} and the heat loss curve HL_{WT}. Even so, to the left and right of the threshold wind speed WS_{TH}, the passive heat exchanger has wasted cooling capacity. A larger passive heat exchanger might be able to provide sufficient cooling, but its physical dimensions would be impracticable for the reasons given above, and such a physically large design would be associated with correspondingly higher levels of wasted cooling capacity.

A cooling arrangement according to the invention, i.e. comprising a passive heat exchanger and a number of air channels for providing additional airflow AF_{PD} over the passive heat exchanger as described in Fig. 3 above, can provide sufficient cooling capacity, as indicated by the curve CC₁. The differences between the curves CC_{PA}, CC₁ can be attributed solely to the additional cooling effect of that additional airflow AF_{PD}. However, some cooling capacity of the cooling arrangement is also 'wasted' here, as indicated by the crosshatched regions between the cooling capacity curve CC₁ and the heat loss curve HL_{WT}.

Fig. 8 shows a graph of heat loss HL_{WT} (in kW) of the components of the wind turbine as a function of wind speed WS (in m/s) and a graph CC₂ of the cooling capacity of the hybrid cooling arrangement of Fig. 5, which uses both passive cooling and fan-augmented active cooling in a hybrid cooling arrangement. The hybrid cooling arrangement 1 of Fig. 5 is associated with less wasted cooling capacity, as indicated by the crosshatched regions. However, sufficient cooling of the wind turbine components is ensured by additional active cooling which can be applied whenever required. Here, beyond a certain first wind speed WS_{LO}, the active cooling is activated to cope with the peak cooling requirements, so that the ventilators in the air channels actively draw in air and direct it at the passive heat exchanger. This additional cooling can be maintained until the wind speed either drops below the first wind speed WS_{LO} again or increases beyond a second, higher, wind speed WS_{HI}, at which wind speed WS_{HI} the cooling capacity of the passive heat exchanger is again sufficient to cool the heat transfer fluid. With such a hybrid design, cooling is sufficient, even at wind speeds about the threshold wind speed WS_{TH}, while the dimensions of the passive heat exchanger can be kept within practicable limits.

Although the present invention has been disclosed in the form of preferred embodiments and variations thereon, it will be understood that numerous additional modifications and variations could be made thereto without departing from the scope of the invention. For example, the passive heat exchanger could also comprise lateral elements that extend sideways away from the canopy to increase cooling capacity, whereby such lateral extensions are preferably dimensioned so that these also comply with maximum allow height so that aviation regulations are complied with.

For the sake of clarity, it is to be understood that the use of "a" or "an" throughout this application does not exclude a plurality, and "comprising" does not exclude other steps or elements. A "unit" or "module" can comprise a number of units or modules, unless otherwise stated.

## Claims

1. A wind turbine cooling arrangement (1) comprising
- a passive heat exchanger (10) arranged to absorb heat from a cooling circuit (12) of a wind turbine (2), which passive heat exchanger (10) is arranged to extend above a canopy (20) of the wind turbine (2); and
- a ventilation arrangement (11, 112), which ventilation arrangement comprises at least one air channel (11), arranged in the interior of the canopy (20), for channelling air onto a surface of the passive heat exchanger (10), wherein the air channel (11) comprises an outlet (111) for expelling the channelled air, which outlet (111) is arranged in a posterior surface of the canopy (20) to open onto the passive heat exchanger (10).

2. A wind turbine cooling arrangement according to claim 1, wherein the air channel (11) comprises an inlet (110) for drawing in the channelled air, which inlet (110) is arranged on a longitudinal surface of the canopy (20).

3. A wind turbine cooling arrangement according to claim 2, wherein the inlet (110) of an air channel (11) is arranged at a region of high pressure at the surface of the canopy, and an outlet (111) of that air channel (11) is arranged at a region of low pressure at the surface of the canopy.

4. A wind turbine cooling arrangement according to any of the preceding claims, wherein the ventilation arrangement comprises a ventilator (112) arranged in an air channel (11).

5. A wind turbine cooling arrangement according to claim 4, wherein the ventilator (112) is activated according to an operational parameter of the wind turbine (2).

6. A wind turbine cooling arrangement according to any of the preceding claims, wherein the ventilation arrangement (11, 112) comprises at least two air channels (11).

7. A wind turbine cooling arrangement according to any of the preceding claims, wherein the passive heat exchanger (10) is dimensioned such that a cooling capacity of the passive heat exchanger (10) is less than a maximum heat loss (HL_{MAX}) of the wind turbine (2), and the ventilation arrangement (11, 112) is dimensioned such that a cooling capacity of the cooling arrangement (1) matches or exceeds a maximum heat loss (HL_{MAX}) of the wind turbine (2).

8. A wind turbine cooling arrangement according to any of the preceding claims, wherein the passive heat exchanger (10) comprises a housing (100), which housing (100) supports a heat dissipating structure (101) arranged to absorb heat from the cooling circuit (12) of a wind turbine (2).

9. A wind turbine cooling arrangement according to any of the preceding claims, wherein an outlet (111) of the air channel (11) is arranged to open essentially directly onto the passive heat exchanger (10).

10. A wind turbine cooling arrangement according to any of the preceding claims, wherein an outlet (111) of the air channel (11) is arranged to direct a cooling airflow (AF_{PD}) at a thermal transfer region (R) of the passive heat exchanger (10).

11. A wind turbine cooling arrangement according to any of the preceding claims, wherein the passive heat exchanger (10) extends above the canopy (20) of the wind turbine (2) to a height that satisfies a maximum regulation height (h_{MAX}), preferably to a height of at most 1.5 m.

12. A wind turbine (2) comprising a wind turbine cooling arrangement (1) according to any of the preceding claims.

13. A wind turbine according to claim 12, comprising a platform (4, 4') arranged on an upper side of the canopy (20), and wherein the platform (4, 4') is dimensioned according to the passive heat exchanger (10).

## Patentansprüche

1. Windturbinen-Kühlanordnung (1), welche umfasst:
- einen passiven Wärmetauscher (10), welcher dafür eingerichtet ist, Wärme von einem Kühlkreis (12) einer Windturbine (2) zu absorbieren, wobei dieser passive Wärmetauscher (10) dafür eingerichtet ist, sich über einer Gondel (20) der Windturbine (2) zu erstrecken; und
- eine Belüftungsanordnung (11, 112), wobei diese Belüftungsanordnung mindestens einen Luftkanal (11), der im Inneren der Gondel (20) angeordnet ist, zum Kanalisieren von Luft auf eine Fläche des passiven Wärmetauschers (10) umfasst, wobei der Luftkanal (11) einen Auslass (111) zum Ausstoßen der kanalisierten Luft umfasst, wobei dieser Auslass (111) in einer hinteren Fläche der Gondel (20) angeordnet ist, sodass er sich auf den passiven Wärmetauscher (10) öffnet.

2. Windturbinen-Kühlanordnung nach Anspruch 1, wobei der Luftkanal (11) einen Einlass (110) zum Ansaugen der kanalisierten Luft umfasst, wobei dieser Einlass (110) an einer Längsfläche der Gondel (20) angeordnet ist.

3. Windturbinen-Kühlanordnung nach Anspruch 2, wobei der Einlass (110) eines Luftkanals (11) an einem Bereich hohen Drucks an der Oberfläche der Gondel angeordnet ist und ein Auslass (111) dieses Luftkanals (11) an einem Bereich niedrigen Drucks an der Oberfläche der Gondel angeordnet ist.

4. Windturbinen-Kühlanordnung nach einem der vorhergehenden Ansprüche, wobei die Belüftungsanordnung einen Ventilator (112) umfasst, der in einem Luftkanal (11) angeordnet ist.

5. Windturbinen-Kühlanordnung nach Anspruch 4, wobei der Ventilator (112) entsprechend einem Betriebsparameter der Windturbine (2) aktiviert wird.

6. Windturbinen-Kühlanordnung nach einem der vorhergehenden Ansprüche, wobei die Belüftungsanordnung (11, 112) mindestens zwei Luftkanäle (11) umfasst.

7. Windturbinen-Kühlanordnung nach einem der vorhergehenden Ansprüche, wobei der passive Wärmetauscher (10) so dimensioniert ist, dass eine Kühlkapazität des passiven Wärmetauschers (10) kleiner als eine maximale Verlustwärme (HL_{MAX}) der Windturbine (2) ist, und die Belüftungsanordnung (11, 112) so dimensioniert ist, dass eine Kühlkapazität der Kühlanordnung (1) gleich einer maximalen Verlustwärme (HL_{MAX}) der Windturbine (2) ist oder diese übersteigt.

8. Windturbinen-Kühlanordnung nach einem der vorhergehenden Ansprüche, wobei der passive Wärmetauscher (10) ein Gehäuse (100) umfasst, wobei dieses Gehäuse (100) eine wärmeableitende Struktur (101) trägt, die dafür eingerichtet ist, Wärme von dem Kühlkreis (12) einer Windturbine (2) zu absorbieren.

9. Windturbinen-Kühlanordnung nach einem der vorhergehenden Ansprüche, wobei ein Auslass (111) des Luftkanals (11) dafür eingerichtet ist, sich im Wesentlichen direkt auf den passiven Wärmetauscher (10) zu öffnen.

10. Windturbinen-Kühlanordnung nach einem der vorhergehenden Ansprüche, wobei ein Auslass (111) des Luftkanals (11) dafür eingerichtet ist, einen Kühlluftstrom (AF_{PD}) auf einen Wärmeübertragungsbereich (R) des passiven Wärmetauschers (10) zu richten.

11. Windturbinen-Kühlanordnung nach einem der vorhergehenden Ansprüche, wobei sich der passive Wärmetauscher (10) über der Gondel (20) der Windturbine (2) bis zu einer Höhe erstreckt, welche eine vorgeschriebene maximale Höhe (h_{MAX}) nicht überschreitet, vorzugsweise bis zu einer Höhe von höchstens 1,5 m.

12. Windturbine (2), welche eine Windturbinen-Kühlanordnung (1) nach einem der vorhergehenden Ansprüche umfasst.

13. Windturbine nach Anspruch 12, welche eine Plattform (4, 4') umfasst, die auf einer Oberseite der Gondel (20) angeordnet ist, und wobei die Plattform (4, 4') entsprechend dem passiven Wärmetauscher (10) dimensioniert ist.

## Revendications

1. Agencement de refroidissement (1) d'éolienne comprenant
- un échangeur de chaleur (10) passif agencé de façon à absorber une chaleur d'un circuit de refroidissement (12) d'une éolienne (2), lequel échangeur de chaleur (10) passif est agencé de façon à s'étendre au-dessus d'une nacelle (20) de l'éolienne (2) ; et
- un agencement de ventilation (11, 112), lequel agencement de ventilation comprend au moins un canal d'air (11), agencé dans l'intérieur de la nacelle (20), pour canaliser de l'air sur une surface de l'échangeur de chaleur (10) passif, dans lequel le canal d'air (11) comprend une sortie (111) pour expulser l'air canalisé, laquelle sortie (111) est agencée dans une surface postérieure de la nacelle (20) pour s'ouvrir sur l'échangeur de chaleur (10) passif.

2. Agencement de refroidissement d'éolienne selon la revendication 1, dans lequel le canal d'air (11) comprend une entrée (110) pour aspirer l'air canalisé, laquelle entrée (110) est agencée sur une surface longitudinale de la nacelle (20).

3. Agencement de refroidissement d'éolienne selon la revendication 2, dans lequel l'entrée (110) d'un canal d'air (11) est agencée au niveau d'une région de haute pression à la surface de la nacelle, et une sortie (111) de ce canal d' air (11) est agencée au niveau d'une région de basse pression à la surface de la nacelle.

4. Agencement de refroidissement d'éolienne selon l'une quelconque des revendications précédentes, dans lequel l'agencement de ventilation comprend un ventilateur (112) agencé dans un canal d'air (11).

5. Agencement de refroidissement d'éolienne selon la revendication 4, dans lequel le ventilateur (112) est activé en fonction d'un paramètre opérationnel de l'éolienne (2).

6. Agencement de refroidissement d'éolienne selon l'une quelconque des revendications précédentes, dans lequel l'agencement de ventilation (11, 112) comprend au moins deux canaux d'air (11).

7. Agencement de refroidissement d'éolienne selon l'une quelconque des revendications précédentes, dans lequel l'échangeur de chaleur (10) passif est dimensionné de façon à ce qu'une capacité de refroidissement de l'échangeur de chaleur (10) passif soit inférieure à une perte maximum de chaleur (HL_{MAX}) de l'éolienne (2), et l'agencement de ventilation (11, 112) est dimensionné de façon à ce qu'une capacité de refroidissement de l'agencement de refroidissement (1) corresponde à ou excède une perte maximum de chaleur (HL_{MAX}) de l'éolienne (2).

8. Agencement de refroidissement d'éolienne selon l'une quelconque des revendications précédentes, dans lequel l'échangeur de chaleur (10) passif comprend un logement (100), lequel logement (100) supporte une structure (101) de dissipation de chaleur agencée pour absorber une chaleur du circuit de refroidissement (12) d'une éolienne (2).

9. Agencement de refroidissement d'éolienne selon l'une quelconque des revendications précédentes, dans lequel une sortie (111) du canal d'air (11) est agencée de façon à s'ouvrir essentiellement directement sur l'échangeur de chaleur (10) passif.

10. Agencement de refroidissement d'éolienne selon l'une quelconque des revendications précédentes, dans lequel une sortie (111) du canal d'air (11) est agencée de façon à diriger un flux d'air de refroidissement (AF_{PD}) sur une région (R) de transfert thermique de l'échangeur de chaleur (10) passif.

11. Agencement de refroidissement d'éolienne selon l'une quelconque des revendications précédentes, dans lequel l'échangeur de chaleur (10) passif s'étend au-dessus de la nacelle (20) de l'éolienne (2) jusqu'à une hauteur qui satisfait à une hauteur maximum réglementaire (h_{MAX}), préférablement jusqu'à une hauteur d'au plus 1,5 m.

12. Éolienne (2) comprenant un agencement de refroidissement (1) d'éolienne selon l'une quelconque des revendications précédentes.

13. Éolienne selon la revendication 12, comprenant une plate-forme (4, 4') agencée sur un côté supérieur de la nacelle (20), et dans laquelle la plate-forme (4, 4') est dimensionnée en fonction de l'échangeur de chaleur (10) passif.
